# EUROPEAN PATENT APPLICATION

(11) **EP 2 259 275 A2**
(43) Date of publication of application: **08.12.2010**
(21) Application number: 10162533.3
(22) Date of filing: 11.05.2010
(51) Int. Cl.: H01F 30/04, H01F 3/12, H01F 38/10, H05B 33/08

(54) **High frequency transformer and multi-output constant current source with high frequency transformer**

(30) Priority: 01.06.2009 CN 200910147065
(71) Applicant: Osram Gesellschaft mit Beschränkter Haftung, 81543 München (DE)
(72) Inventor: Jia, Hui, Panyu, Guangzhou City Guangdong 511400 (CN); Zhuang, Xi He, Panyu, Guangzhou City Guangdong 511400 (CN); Bordin, Luca, Shenzen Guangdong 518053 (CN)

(57) **Abstract**

The present invention discloses a high frequency transformer and a multi-output constant current source with the high frequency transformer. The high frequency transformer comprises a magnetic core (C), a primary winding (Np) and a plurality of secondary windings (Nsl, Ns2), wherein the plurality of secondary windings and the primary winding (Np) are arranged separately, and each secondary winding constitutes a parasite current transformer with the primary winding (Np). The parasite current transformer ensures that the magnitudes of the currents flowing through the plurality of secondary windings (Nsl, Ns2) maintain a required proportion between each other.

## Description

### Field of the Invention

The present invention relates to a high frequency transformer, and in particular, to a high frequency transformer used for a multi-output constant current source. Further, the present invention relates to a multi-output constant current source having such high frequency transformer.

### Background of the Invention

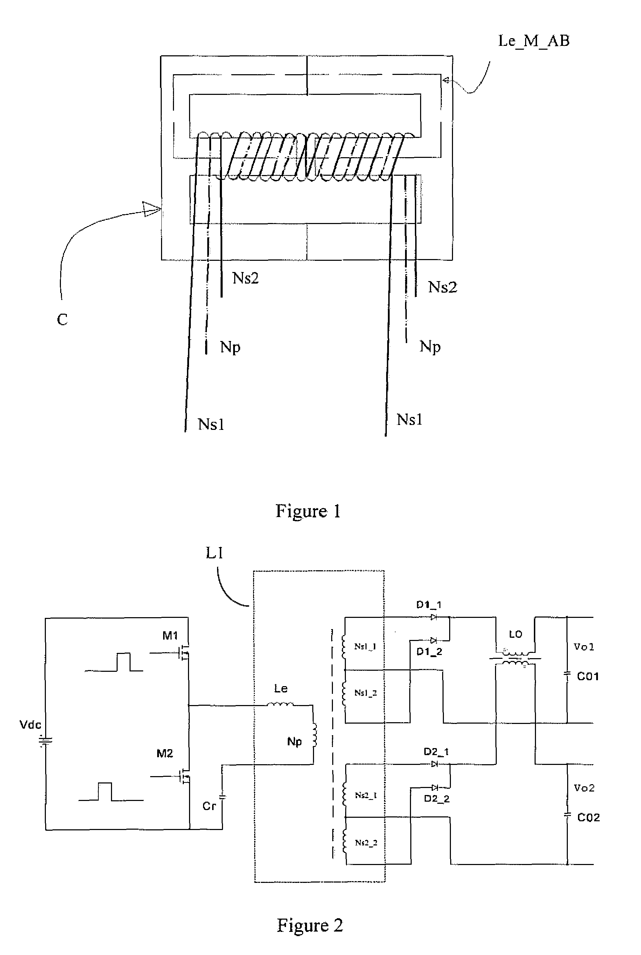

Figure 1 is a schematic diagram showing a presently widely used high frequency transformer for a multi-output constant current source. The transformer has a first secondary winding Ns1, a second secondary winding Ns2 and a primary winding Np. As can be seen from Figure 1, the secondary windings Ns1, Ns2 and the primary winding Np are wound compactly on a magnetic core C with each other. Since the magnetic fluxes of these three windings are almost the same, i.e., there is no leakage inductance between these windings, and the lead wires of these three windings are tightly adjacent to each other in space, it may be deemed in the ideal case that the coupling coefficient between the windings K=1. In this case, the three windings form an ideal voltage transformer T along the common magnetic path Le_M_AB. In the high frequency domain (in the present application, the high frequency is considered with respect to the frequency of the commercial power, wherein the range of the high frequency is equal to or higher than 20kHz), such design of the voltage transformer is generally employed, i.e., the voltage transformer is generally designed to have a leakage inductance as small as possible, because a high frequency voltage transformer having the leakage inductance may lower the system efficiency, and induce an additional loss.

Figure 2 shows a multi-output constant current source with the transformer L1 shown in Figure 1. With the control of switches M1 and M2 implemented by a high frequency driving signal, a variable current passing through the primary winding Np of the transformer L1 is generated by a DC power supply Vdc, wherein Le represents the total leakage inductance between the primary loop and the two secondary loops. On the side of the secondary windings of the transformer L1, there parallelly exist a first output channel and a second output channel. These output channels are connected with the secondary windings respectively, and loads (not shown) are connected to the output terminal Vo1 of the first output channel and the output terminal Vo2 of the second output channel respectively. In the first output channel, the branch formed by the second winding Ns1_1 and the diode D1_1 and that formed by the secondary winding Ns1_2 and the diode D1_2 constitute a full wave rectifying circuit, so as to ensure that the DC current required is output. The second output channel has the same structure as the first output channel. In order to ensure balanced output currents between the first output channel and the second output channel, in such circuit topology, it is required to use a current transformer Lo to couple the first output channel and the second output channel, so that a constant current source with balanced output currents in the two channels as required may be realized. In the present application, balance means that the output currents in individual channels maintain a certain proportional relation with respect to each other, such as (but not limited to) maintain the same magnitude, i.e., a proportional relation of 1:1, with respect to each other.

The above system has the disadvantage that because the primary winding Np and the secondary windings Ns1_1, Ns1_2, Ns2_1 and Ns2_2 of the transformer form an ideal voltage transformer with a coupling coefficient of approximate 1, the additional current transformer Lo needs to be used, so as to ensure the balance of the currents in the first output channel and the second output channel. However, such discrete element makes the system structure complex, and thus lowers the system efficiency and is not advantageous for the integration. The production cost of the system is relatively high.

### Summary of the Invention

An object of the invention is to provide a high frequency transformer. With the high frequency transformer, balanced output currents in a plurality of output channels may be achieved. Further, the invention is to provide a multi-output constant current source with the transformer according to the invention.

According to the invention, it is provided a high frequency transformer, including a magnetic core C, a primary winding Np and a plurality of secondary windings Ns1, Ns2, wherein the plurality of secondary windings Ns1, Ns2 are arranged on two sides of the primary winding Np, and the plurality of secondary windings form a parasite current transformer between them via the primary winding Np.

Further, according to the invention, there is provided a constant current source, wherein the multi-output constant current source includes at least one high frequency transformer according to one of the claims and multiple output channels, wherein the output channels are connected to the secondary windings of the high frequency transformer respectively, so that the output currents in individual output channels of the constant current source are ensured to be balanced via the parasite current transformer.

With the high frequency transformer according to the invention, a multi-output current source with high efficiency and simple construction may be realized, whose currents in the multi output channels are essentially balanced. Because with the multi-output current source according to the invention, no external current transformer is required to make the currents in individual output branches balanced, such current source is easy to be integrated, the system efficiency is improved and the production cost is low.

### Brief Description of the Drawings

The present invention may be better understood by referring to the description hereinafter in combination with the drawings, wherein in the drawings, the same or similar reference signs are used to indicate the same or similar components. All the drawings and the detailed description are included in the specification and constitute a part of the specification, and are used to further present examples to illustrate the preferred embodiments of the invention and explain the principles and advantages of the invention. Wherein:

Figure 1 shows a schematic diagram of a high frequency transformer used for the multi-output constant current source in the prior art in principle;

Figure 2 shows a circuit diagram of a multi-output constant current source using the high frequency transformer shown in Figure 1;

Figure 3 shows a schematic diagram of the high frequency transformer used for the multi-output constant current source according to an embodiment of the invention in principle;

Figure 4 shows a schematic structural diagram of a winding shaft of the high frequency transformer used for the multi-output constant current source according to an embodiment of the invention;

Figure 5 shows a schematic diagram of the high frequency transformer used for the multi-output constant current source according to another embodiment of the invention in principle;

Figure 6 shows an equivalent circuit diagram of the high frequency transformer according to the embodiment of the invention in principle;

Figure 7 shows a circuit diagram of the multi-output constant current source according to an embodiment of the invention, wherein the high frequency transformer according to the invention is employed; and

Figure 8 shows a circuit diagram of the multi-output constant current source according to another embodiment of the invention, wherein the high frequency transformer according to the invention is employed.

In the drawings, the same reference signs are used for the same or corresponding elements.

### Detailed Description of the Embodiments

Hereinafter, the embodiments of the present invention will be described in combination with the drawings. In view of clearness and conciseness, not all the features of the practical embodiments are described in the description. However, it should be understood that many decisions specific to the embodiments need to be made during the development of any practical embodiments, so as to achieve the specific objects of the developer, and these decisions may vary to some extent according to different embodiments. Further, it should be understood that although the developing work may be rather complicated and time-consuming, it is only a routine job for those skilled in the art who benefit from the disclosure of the present invention.

It should be further pointed out here that in the drawings, only the device structure closely related to the solution of the present invention is illustrated in the drawings, and other details having little relation with the present invention is omitted, so as to avoid making the present invention unclear due to unnecessary details.

In the low frequency domain such as 50Hz or 60Hz, the influence of the leakage inductance in the transformer is not prominent, so there is not much requirements raised regarding the leakage inductance in the transformer. In comparison, in the high frequency domain above 20kHz, the leakage inductance generally should be avoided as far as possible, because the leakage inductance may greatly effect the circuit attributes and cause an extra loss. Therefore, as described above by referring to Figure 1, the primary winding and the secondary windings are generally wound tightly with each other in the high frequency domain, so as to avoid the leakage inductance. However, differing from the prior art, the invention aims to make use of the leakage inductance of the transformer in the high frequency domain to form a current transformer required, so as to achieve the current balance in the branches where a plurality of the secondary windings of the transformer are located. In the invention, the object is achieved through the relative position relation of the primary winding and the secondary windings and/or through the design of the magnetic core. Hereinafter, the invention will be further described with the embodiments.

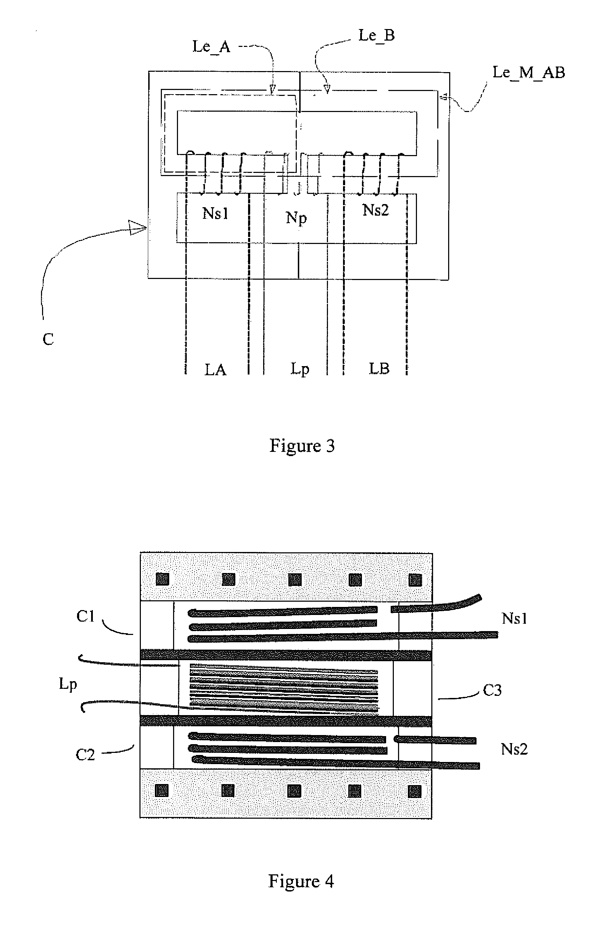

Figure 3 shows a schematic diagram of the high frequency transformer used for the multi-output constant current source according to an embodiment of the invention in principle. It should be noted that the relevant elements are schematically illustrated for explaining the principle of the transformer. For example, the magnetic path is shown as rectangles to facilitate understanding, and the essence of the invention is not affected.

It can be seen from Figure 3 that the first secondary winding Ns1, the primary winding Np and the second secondary winding Ns2 are wound on the magnetic core C in turn. Differing from the structure in the prior art shown in Figure 1, the three windings Ns1, Np and Ns2 are not wound tightly with each other, but are arranged separately, i.e., the coupling coefficients K between each secondary winding and the primary winding are smaller than 1. As can be seen from Figure 3, three magnetic paths are generated from such arrangement of the windings: a common magnetic path Le_M_AB of the three windings, a first leakage magnetic path Le_A and a second leakage magnetic path Le_B. The primary winding Np and two secondary windings Ns1 and Ns2 form a voltage transformer T by means of the common magnetic path Le_M_AB. Further, due to the existence of the leakage magnetic path, the primary winding Np and the first secondary winding Ns1 form a first parasite current transformer LA by means of the first leakage magnetic path Le_A, and the primary winding Np and the second secondary winding Ns2 form a second parasite current transformer LB by means of the second leakage magnetic path Le_B. Through the interaction between the first current transformer LA and the second current transformer LB, where the primary winding acts as an intermediate, the currents in the two secondary windings Ns 1 and Ns2 may advantageously be kept balanced by adjusting parameters of the transformer such as height, thickness, distance and number of turns of these windings, whereas the voltage interaction between the secondary windings may be negligible.

As can be seen from Figure 3, since the secondary windings and the primary winding are arranged separately, the leakage magnetic path may easily be produced through such arrangement. Particularly, the secondary windings are not necessarily arranged to have an interval from the primary winding. For example, the primary winding may overlap with the secondary windings to some extent respectively. The term "arranged separately" used in the present application should be understood as including the situation of partially overlapping. Figure 3 only illustrates a preferred solution. In another preferred solution, the secondary windings may be arranged symmetrically with respect to the primary winding, so as to achieve the object that the currents through the two secondary windings are the same. Naturally, the current proportion required may be achieved by adjusting various parameters of the windings instead of the symmetrical arrangement.

In order to be beneficial to generating the leakage magnetic path, the magnetic core may also be designed correspondingly. Preferably, the magnetic core is designed to be adapted to generate, for each secondary winding, a leakage magnetic path that passes through present secondary winding and the primary winding but does not pass through other secondary winding. Thus, the parasite current transformer may be formed. Particularly preferably, the magnetic core is designed with a gap in the position of the primary winding.

Particularly, as can be seen from Figure 3, the magnetic core C is constituted by two E-shaped magnetic core parts. The central lateral arms of the two E-shaped magnetic core parts are shorter with respect to the upper and lower lateral arms. With such configuration of the E-shaped magnetic core parts, there remains a gap between the central lateral arms when the E-shaped magnetic core parts are combined together, so that the required leakage magnetic paths may be easier to be generated when the windings are wound thereon.

Alternatively, the two secondary windings Ns1 and Ns2 may also be wound on the longer upper lateral arm or lower lateral arm of the E-shaped magnetic core part and have certain distance between them, so that the coupling coefficient between the two secondary windings is smaller than 1, preferably smaller than 0.9, and the primary winding Np is still wound on the central lateral arms. The object of the present invention may also be achieved with such arrangement. However, because parts of the magnetic paths of Ns1 and Ns2 do not pass through Np, the efficiency of the system may be lowered.

Alternatively, four secondary windings may be arranged, which are wound symmetrically on the upper lateral arms and the lower lateral arms of two E-shaped magnetic core parts respectively. It would readily occur to those skilled in the art to arrange not only two secondary windings. Instead, a plurality of secondary windings may be arranged, so that these secondary windings use leakage magnetic paths to form current transformers with the primary winding, so that the currents in the output channels connected to the corresponding secondary windings may be kept balanced.

Figure 4 shows a schematic structural diagram of a winding shaft of the transformer used for the multi-output constant current source according to an embodiment of the invention. The winding shaft has a through-hole in the center. After the primary winding and the secondary windings are wound with the winding shaft, a magnetic core passes through the through-hole. For example, the central lateral arms of the two E-shaped magnetic core parts pass through the through-hole, so as to form an integral voltage transformer. As can be seen in the drawing, the winding shaft is divided into three chambers C1, C2 and C3. The primary winding Np is wound in the middle chamber C2, and the first secondary winding Ns1 and the second secondary winding Ns2 are wound in the chambers C1 and C3 on both sides respectively. Preferably, the two secondary windings are constituted symmetrically with respect to the primary winding Np as far as possible. For example, the two secondary windings have the same distance to the primary winding Np, so that the primary winding Np has the same influence on the two secondary windings.

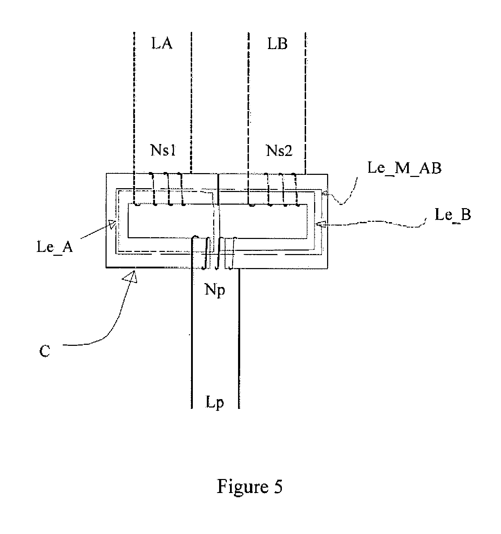

Figure 5 shows a schematic diagram of the transformer used for the multi-output constant current source according to another embodiment of the invention in principle. As can be seen from Figure 5, the magnetic core is constituted by two C-shaped magnetic core parts. The lower lateral arms of these two C-shaped magnetic core parts are shorter than the upper lateral arms. With such configuration of the C-shaped magnetic core parts, there remains a gap between the lower lateral arms when the C-shaped magnetic core parts are combined together, so that the required leakage magnetic paths may be easier to be generated when the windings are wound thereon. In such design, the two secondary windings Ns 1 and Ns2 are arranged on two sides of the primary winding Np and are arranged on the upper lateral arm, so that the coupling coefficient between the two secondary windings is smaller than 1, preferably smaller than 0.9. Similarly, such configuration of the windings generates three magnetic paths: a common magnetic path of the three windings Le_M_AB, a first leakage magnetic path Le_A and a second leakage magnetic path Le_B. The primary winding Np and the two secondary windings Ns1 and Ns2 form a voltage transformer T. Further, due to the existence of the leakage magnetic paths, the primary winding Np and the first secondary winding Ns1 form a first parasite current transformer LA by means of the first leakage magnetic path Le_A, and the primary winding Np and the second secondary winding Ns2 form a second parasite current transformer LB by means of the second leakage magnetic path Le_B. Through the interaction between the first current transformer LA and the second current transformer LB, the currents in the two secondary windings Ns1 and Ns2 may advantageously be kept balanced by adjusting parameters of the transformer including height, thickness, distance and number of turns of the windings, whereas the voltage interaction between the secondary windings may be negligible. Because in the case of the C-shaped magnetic core parts, almost all the magnetic paths of the secondary windings Ns1 and Ns2 pass through the primary winding Np, so that the problem may be eliminated that the efficiency is lowered when Ns1, Ns2 and Np are not arranged on the same lateral arms of the E-shaped magnetic core parts.

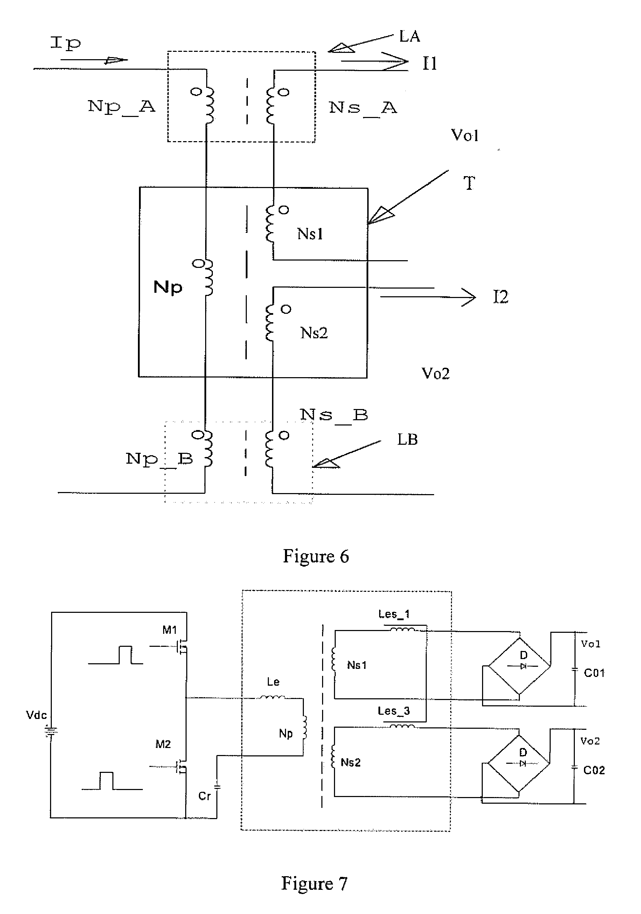

In order to illustrate in the principle, Figure 6 shows an equivalent circuit diagram of the transformer according to an embodiment of the invention in principle. As illustrated with respect to Figure 3, the transformer according to the invention may include a voltage transformer T and two parasite current transformers LA and LB in the equivalent circuit diagram. Generally, the circuits of the output channels where the secondary windings Ns1 and Ns2 are located have the same structure. Thus, in the case of the same load, the secondary windings Ns1 and Ns2 have the same output current, i.e., I1=I2. When for example something (such as aging) happened to the load connected in the output channel where the secondary winding Ns1 is located, the output currents of the two secondary windings may be different. Assuming that I1<I2, when the output current I1 is decreased, the current Ip in the primary winding is also decreased due to the parasite current transformer LA. As can be seen from the equivalent structural diagram of the transformer, the windings Np_A and Np_B are connected in series. Therefore, the current flowing through the winding Np_B of the parasite current transformer is decreased, which causes the decrease of the output current I2 of the output channel where the secondary winding Ns2 is located, and finally I1=I2. In other words, with the special design of the transformer of the invention, it is equivalent that a current transformer is formed between the two secondary windings, and this current transformer keeps the currents in the two secondary windings balanced. Further, since the two secondary windings are arranged on two sides of the primary winding, the coupling coefficient K between the two secondary windings is much smaller than 1, preferably smaller than 0.9. Thus, it is avoided to a great extent that the voltages in each branch of the secondary windings intact with each other directly. Because of such property of the transformer according to the invention, the additional current transformer Lo required in the prior art may be omitted.

Figure 7 shows a circuit diagram of the multi-output constant current source according to an embodiment of the invention, wherein the transformer according to the invention is employed. The secondary windings Ns1 and Ns2 of the transformer are connected to the corresponding output channels respectively. The parts in Figure 7, which are the same as in Figure 2, will not be described again here, wherein D is a rectifying circuit. As can be seen from the circuit diagram, because a parasite current transformer Les_1-Les_3 is formed, the currents in the first output channel and the second output channel may be kept balanced, so that the additional current transformer Lo required in the prior art may be omitted. In other words, with the transformer according to the invention, it is equivalent that the additional current transformer originally required is integrated into the original voltage transformer, so that the system efficiency may be improved, and the cost may be lowered.

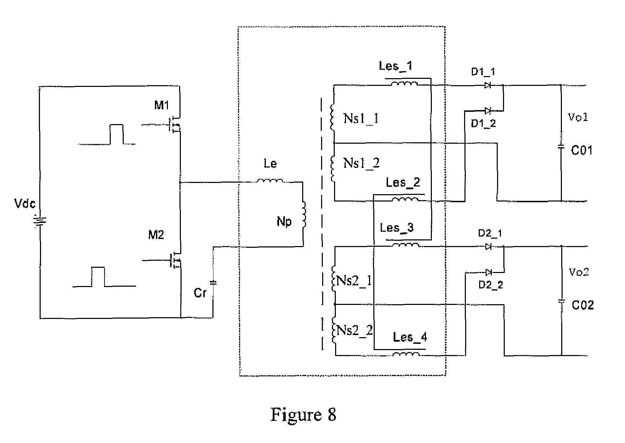

Figure 8 shows a circuit diagram of the multi-output constant current source according to another embodiment of the invention, wherein the transformer according to the invention is employed. As can be seen from the drawing, the same "resonant LLC topology" as in Figure 2 is employed in the circuit shown in Figure 8. In the embodiment shown in Figure 8, the first output channel has windings Ns1_1 and Ns1_2, and the second output channel has windings Ns2_1 and Ns2_2. They constitute a circuit structure similar to that shown in Figure 2. Due to the unidirection conducting property of the diodes D1_1, D1_2, D2_1 and D2_2, when the current path Ns1_1 - Les_1 - D1_1 of the first output channel is put through, the other current path Ns1_2 - Les_2 - D1_2 is blocked. Similarly, the current path Ns2_1 - Les_3 - D2_1 of the second output channel is put through, and the other current path Ns2_2 - Les_4 - D2_2 is blocked. Thus, it is equivalent that Les_1 and Les_3 form a parasite current transformer, and Les_2 and Les_4 form another parasite current transformer. Further, such circuit already possesses the rectifying function. Based on the same principle as described with respect to Figure 7, it is thus assured that the output currents in the first output channel and the second output channel are balanced, and no additional current transformer is required. Thus, the system efficiency is improved, and the cost is lowered.

The transformer according to the invention may be employed separately. When more output channels are required, multiple transformers may be used parallelly. For example, 2N output channels may be realized when N transformers according to the invention as shown in Figure 3 are used.

Presently, an illumination device with high electro-optical conversion efficiency is desired in the general illumination application. In order to make the application design simple, a manner is to use an insulated power supply. The characteristic of such power supply is that the power supply has multiple output channels, the output currents in each channel are kept balanced, and the voltages are independent from each other. This is particularly the case in the LED illumination application. In order to obtain a high illumination intensity, a plurality of illumination devices are generally connected parallelly. An important aspect of such system is the efficiency and cost of the whole illumination system, and the selection of the power supply topology has a prominent influence on the efficiency and cost.

The multi-output constant current source according to the invention may be used in the LED illumination. In the LED illumination or in an LED display, a plurality of LED strings are usually used to achieve a high brightness, and it is required that the currents flowing through these LED strings have the same magnitude, so as to realize a homogeneous illumination. With the multi-output constant current source according to the invention, the plurality of LED strings may be connected in each output channel of the multi-output constant current source, and the multi-output constant current source is able to automatically keep the output currents of each output channel balanced, particularly keep them to be the same.

Finally, it should be noted that the term "include", "comprise" or any other variations means a non-exclusive inclusion, so that the process, method, article or device that includes a series of elements includes not only these elements but also other elements that are not explicitly listed, or further includes inherent elements of the process, method, article or device. Moreover, when there is no further limitation, the element defined by the wording "include(s) a ..." does not exclude the case that in the process, method, article or device that includes the element there are other same elements.

The embodiments of the invention are described in detail in combination with drawings. However, it should be understood that the embodiments described above are only used for illustrating the invention, and do not constitute a limitation of the invention. Various modifications and variations may be made to the above embodiments by those skilled in the art, without departing from the essential and scope of the present invention. Therefore, the scope of the present invention is only defined by the appended claims and the equivalent meanings thereof.

## Claims

1. A high frequency transformer, comprising a magnetic core (C), a primary winding (Np) and a plurality of secondary windings (Ns1, Ns2), wherein the plurality of secondary windings (Ns1, Ns2) and the primary winding (Np) are arranged separately, and each secondary winding constitutes a parasite current transformer with the primary winding (Np).

2. The high frequency transformer according to claim 1, wherein the plurality of secondary windings (Ns1, Ns2) are arranged symmetrically with respect to the primary winding (Np).

3. The high frequency transformer according to any one of the preceding claims, wherein the magnetic core (C) is designed to be adapted to generate, for each secondary winding, a leakage magnetic path that passes through the present secondary winding and the primary winding but does not pass through the other secondary winding, so as to form the parasite current transformer.

4. The high frequency transformer according to any one of the preceding claims, wherein the magnetic core (C) is designed to have a gap in a position of the primary winding.

5. The high frequency transformer according to any one of the preceding claims, wherein the magnetic core (C) consists of two C-shaped magnetic core parts or E-shaped magnetic core parts, and lateral arms of the two magnetic core parts, on which the primary winding is located, are shorter than other lateral arms.

6. The high frequency transformer according to any one of the preceding claims, comprising two secondary windings and a winding shaft, wherein three chambers (C1, C2, C3) are arranged on the winding shaft, a first secondary winding (Ns1), the primary winding (Np) and a second secondary winding (Ns2) are arranged in the three chambers (C1, C2, C3) in turn respectively.

7. The high frequency transformer according to claim 6, wherein a distance between the first secondary winding (Ns1) and the primary winding (Np) is the same as a distance between the second secondary winding (Ns2) and the primary winding (Np).

8. The high frequency transformer according to claim 5, wherein the secondary windings and the primary winding are arranged on the same lateral arms.

9. The high frequency transformer according to claim 5, wherein the secondary windings and the primary winding are arranged on different lateral arms.

10. The high frequency transformer according to claim 5, wherein the plurality of secondary windings are arranged on an upper lateral arm and a lower lateral arm of the magnetic core constituted by two E-shaped magnetic core parts.

11. The high frequency transformer according to any one of the preceding claims, wherein each secondary winding comprises two windings respectively, so that two parasite current transformers are formed between each secondary winding and the primary winding.

12. The high frequency transformer according to any one of the preceding claims, wherein a coupling coefficient K between the secondary windings is smaller than 0.9.

13. A multi-output constant current source, comprising: at least one high frequency transformer according to any one of the preceding claims and a plurality of output channels, wherein the output channels are connected to secondary windings of the high frequency transformer respectively.

14. The multi-output constant current source according to claim 13, wherein the output channels of the multi-output constant current source is symmetrical.

15. The multi-output constant current source according to claim 13 or 14, wherein voltages of each output channels of the multi-output constant current source are independent from each other.

16. The multi-output constant current source according to any one of claims 13 to 15, wherein the multi-output constant current source is used for a light-emitting diode illumination module.
